Europäisches Patentamt

European Patent Office

Office européen des brevets

(11) Numéro de publication: **0 436 453 A1**

## (12) DEMANDE DE BREVET EUROPEEN

(21) Numéro de dépôt: 90440127.0

(22) Date de dépôt: 28.12.90

(51) Int. Cl.5: **B23Q 16/00**, B23Q 5/04

(30) Priorité: 05.01.90 FR 9000196

(43) Date de publication de la demande:
10.07.91 Bulletin 91/28

(84) Etats contractants désignés:
DE ES FR GB IT NL SE

(71) Demandeur: EMILE PFALZGRAF "EPB", S.A.
8b, rue de Neuwiller
F-67330 Bouxwiller(FR)

Demandeur: AEROSPATIALE Société
Nationale Industrielle
37, Boulevard de Montmorency
F-75781 Paris Cédex 16(FR)

(72) Inventeur: Pfalzgraf, Emile
7, rue de Neuwiller
F-67330 Bouxwiller(FR)
Inventeur: Jaeger, Claude
28, rue Firth
F-67700 Monswiller(FR)
Inventeur: Laidet, Philippe
38, rue des Anges
F-31200 Toulouse(FR)
Inventeur: Medard, Joseph
32, Chemin de Fenouillet
F-31200 Toulouse(FR)
Inventeur: Tremolet, Francis
10, Impasse Edouard Eustanié
F-31200 Toulouse(FR)

(74) Mandataire: Nuss, Pierre et al
10, rue Jacques Kablé
F-67000 Strasbourg(FR)

(54) **Ensemble porte-outils muni d'un dispositif de palpage.**

(57) La présente invention concerne un ensemble porte-outils, essentiellement constitué par un arbre central porte-outil (1) muni, d'une part, d'un cône de montage pour la fixation dans une broche de machine-outil et, d'autre part, du côté opposé au cône, d'un corps cylindrique intermédiaire pourvu à sa partie avant d'un moyen de fixation d'un outil, caractérisé en ce qu'il est pourvu, en outre, d'un dispositif (2) de palpage centré sur l'arbre central (1) et guidé en translation sur ce dernier, d'un moyen de lubrification et d'un moyen de nettoyage de l'emplacement de l'usinage au niveau de l'application du dispositif de palpage (2).

Fig.1

EP 0 436 453 A1

## ENSEMBLE PORTE-OUTILS MUNI D'UN DISPOSITIF DE PALPAGE

La présente invention concerne le domaine des accessoires de machines-outils, en particulier des machines spécialement destinées à des opérations d'usinage particulières telles que la réalisation de perçages, d'alésages et de fraisurages extrêmement précis en profondeur sur tous types de plans, à savoir rectilignes, courbes ou bombés, pour permettre la mise en place dans ces usinages de rivets de fixation, plus particulièrement dans le domaine de la construction aéronautique et spatiale.

Une opération de fraisurage au moyen de machines automatiques exige un arrêt immédiat desdites machines dès obtention de la profondeur de la fraisure requise par rapport à la peau de la pièce à usiner. Cette profondeur doit être respectée très rigoureusement afin que, lors du montage des rivets et fixation de ces derniers dans les perçages et fraisurages de la pièce usinée, aucun rivet ne dépasse ou ne soit en retrait de la peau de la pièce, ce qui aurait pour conséquence des turbulences aérodynamiques néfastes sur l'ensemble des pièces.

La présente invention a pour but de fournir un ensemble porte-outils destiné à assurer un usinage extrêmement précis et répétitif.

En effet, conformément à l'invention l'ensemble porte-outils, qui est essentiellement constitué par un arbre central porte-outil muni, d'une part, d'un cône de montage pour la fixation dans une broche de machine-outil et, d'autre part, du côté opposé au cône, d'un corps cylindrique intermédiaire pourvu à sa partie avant d'un moyen de fixation d'un outil, est pourvu, en outre, d'un dispositif de palpage centré sur l'arbre central et guidé en translation sur ce dernier, d'un moyen de lubrification et d'un moyen de nettoyage de l'emplacement de l'usinage au niveau de l'application du dispositif de palpage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue en plan et en coupe d'un ensemble porte-outils conforme à l'invention ;

la figure 2 est une vue en élévation latérale et partiellement en coupe de l'ensemble porte-outils suivant la figure 1 ;

la figure 3 est une vue en élévation par l'arrière de l'ensemble porte-outils ;

la figure 4 est une vue en élévation par l'avant de l'ensemble porte-outils ;

la figure 5 est une vue en coupe suivant A-A de la figure 2 ;

la figure 6 est une vue en coupe suivant B-B de la figure 4 ;

la figure 7 est une vue analogue à celle de la figure 1 d'une variante de réalisation de l'ensemble porte-outils ;

la figure 8 est une vue partielle en coupe du couvercle de palpage de l'ensemble suivant la figure 7, décalée par rapport à cette dernière ;

la figure 9 est une vue partielle en coupe du raccord d'alimentation du lubrifiant, et

la figure 10 est une demi-vue analogue à celle de la figure 8 représentant le couvercle de palpage dans une position décalée par rapport à celles des figures 7 et 8.

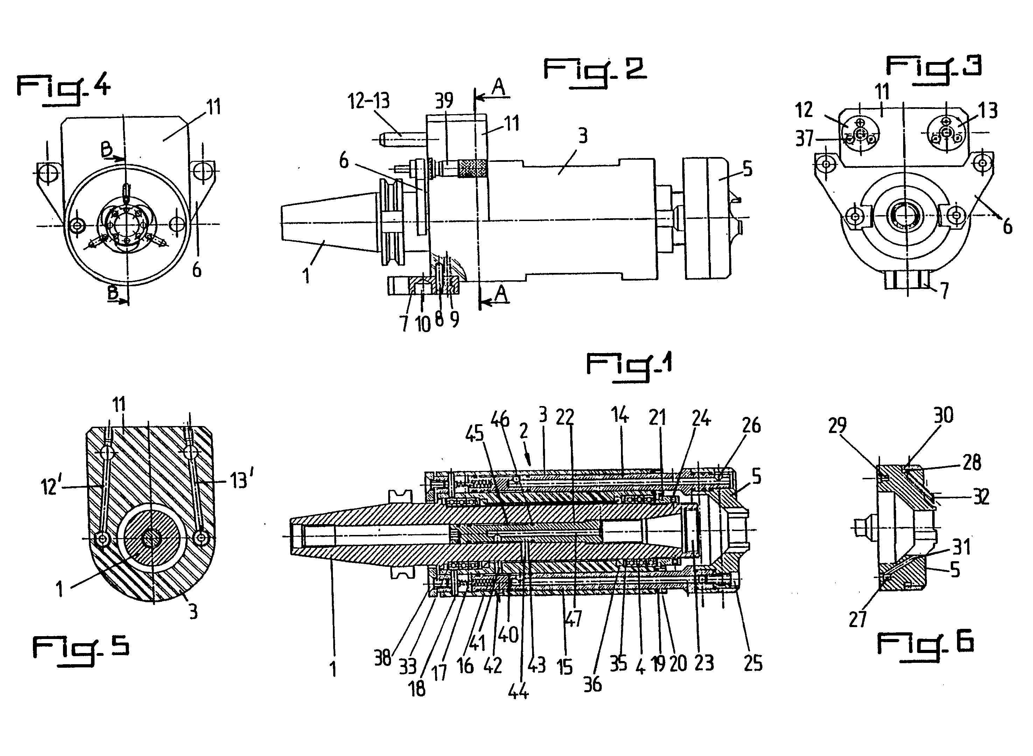

Conformément à l'invention et comme le montrent plus particulièrement, à titre d'exemple, les figures 1 à 4 des dessins annexés, l'ensemble porte-outils qui est essentiellement constitué par un arbre central porte-outil1 muni, d'une part, d'un cône de montage pour la fixation dans une broche de machine-outil et, d'autre part, du côté opposé au cône, d'un corps cylindrique intermédiaire pourvu à sa partie avant d'un moyen de fixation d'un outil, est pourvu, en outre, d'un dispositif 2 de palpage centré sur l'arbre central 1 et guidé en translation sur ce dernier, d'un moyen de lubrification et d'un moyen de nettoyage de l'emplacement de l'usinage au niveau de l'application du dispositif de palpage 2.

L'arbre central porte-outil 1 présente à sa partie arrière un cône normalisé prolongé vers l'avant par un corps cylindrique intermédiaire se terminant par un moyen de fixation d'un outil tel qu'une fraise, un foret, etc..., et est pourvu, en outre, d'une vis axiale 22 de réglage de positionnement de l'outil en longueur. Le moyen de fixation peut être, de manière connue, un porte-pinces 23 avec pinces et écrou vissé sur la partie avant de l'arbre central 1, ou encore un dispositif de fixation par alésage cylindrique du type système Weldon ou Whistle-Notch, ou tout autre moyen de fixation.

Le dispositif de palpage 2 est constitué par un corps cylindrique 3 centré sur l'arbre central porte-outils 1 au moyen de roulements 4, protégés vers l'extérieur du corps 3 par des bagues d'étanchéité 33 et s'appuyant contre des épaulements dudit corps 3 au moyen d'entretoises 35, des joints d'étanchéité 36 réalisant l'étanchéité vers l'intérieur du corps 3, qui est bloqué en translation sur ledit arbre 1 au moyen d'un écrou 21 lui-même bloqué en position par des vis à bout plat 24, par un couvercle de palpage 5 s'étendant sur la partie avant de l'ensemble porte-outils concentriquement à l'outil, par une plaque porte-butée 6 reliée au corps cylindrique 3 sur son côté tourné vers le cône de l'arbre central 1 et par un support d'indexation 7 positionné sur le corps 3 au moyen d'une goupille 8, fixé sur ledit corps 3 au moyen d'une vis 9 et portant un dispositif de codage 10, tel qu'une puce électronique ou autre. Les bagues 33 sont destinées à éviter toute pénétration d'impureté de l'extérieur vers les roulements 4.

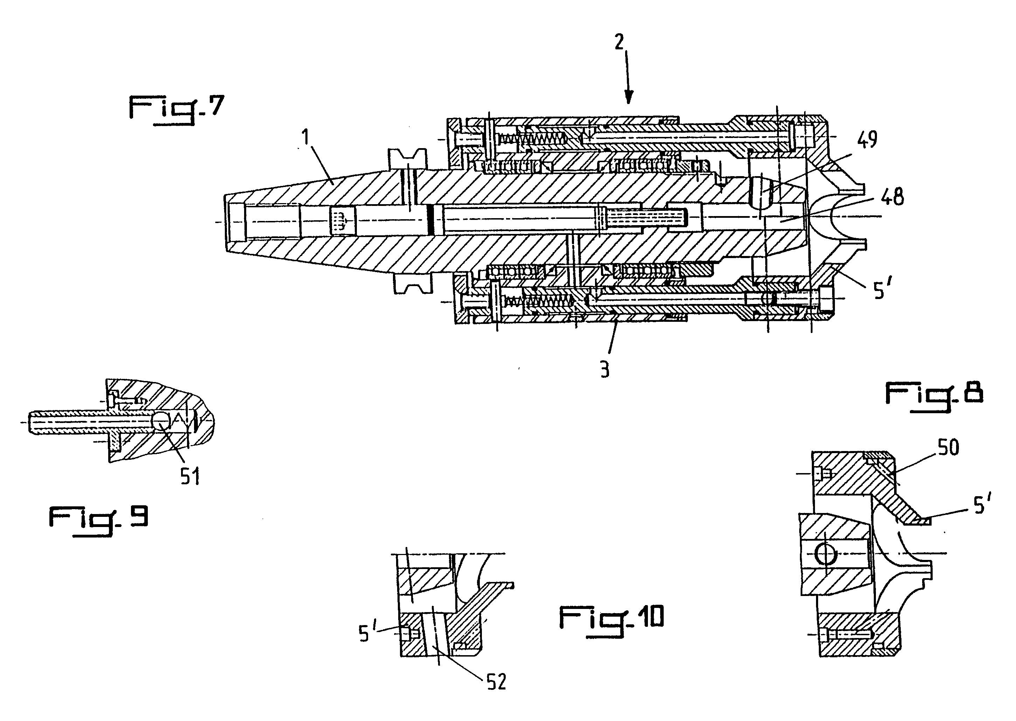

A son extrémité arrière portant la plaque porte-butée 6, le corps cylindrique 3 présente une partie excentrée 11 portant un raccord d'alimentation en air 12 et un raccord d'alimentation en eau 13 (figure 3) fixés au moyen de vis 37 et reliés, par l'intermédiaire de canaux respectifs 12' et 13' (figure 5), à des colonnes correspondantes d'arrivée d'air 14 et d'arrivée d'eau 15 montées de manière déplaçable en translation dans le corps cylindrique 3 contre l'action de ressorts 16 guidés sur des tétons 17 s'appuyant sur des goupilles 18 diamétralement opposées logées dans le corps 3 et coopérant, pour le guidage et une limitation du déplacement des colonnes 14 et 15, avec des lumières prévues dans les extrémités de ces colonnes 14 et 15, l'étanchéité du montage des colonnes 14 et 15 dans le corps cylindrique 3 étant assurée par des joints toriques 19 serrés au moyen de bouchons 20 et lesdites colonnes 14 et 15 portant à leur extrémité opposée le couvercle de palpage 5.

Le couvercle de palpage 5 est fixé, d'une part, sur la colonne d'arrivée d'eau 15 au moyen d'une vis 25 et sur la colonne d'arrivée d'air 14 au moyen de deux vis pointeau 26 et les conduites respectives d'amenée d'eau et d'amenée d'air desdites colonnes 15 et 14 sont reliées à des chambres annulaires correspondantes 27 et 28 délimitées dans ledit couvercle 5, d'une part, par une rondelle-bague en deux segments 29 et, d'autre part, par une bague de fermeture extérieure 30, lesdites chambres 27 et 28 débouchant respectivement à l'avant de la partie interne du couvercle 5 et sur la face avant de ce dernier par l'intermédiaire de canaux en biais 31 et de buses d'arrivée d'air 32 (figure 6).

La plaque porte-butée 6 est, d'une part, fixée sur les colonnes d'arrivée d'air 14 et d'arrivée d'eau 15 au moyen de vis à tête fraisée 38 pénétrant dans l'extrémité desdites colonnes comportant les lumières de passage des goupilles 18, à l'arrière de ces lumières et, d'autre part, pourvue d'au moins une, de préférence de deux butées micrométriques 39 destinées à coopérer avec des micro-contacts correspondants prévus sur le bâti de la broche de la machine-outil. Les butées micrométriques 39 sont, de manière connue, réalisées sous forme de tiges munies à une extrémité d'un filetage micrométrique pénétrant dans un taraudage correspondant solidaire de la plaque porte-butée 6 et pouvant être bloquées en position réglée au moyen d'un contre-écrou.

Bien entendu, une seule butée micrométrique serait suffisante pour déclencher la machine lors de l'arrivée en fin de course d'usinage préréglée, la deuxième butée étant uniquement prévue pour assurer une meilleure sécurité de fonctionnement.

La conduite d'amenée d'eau de la colonne d'arrivée d'eau 15 est reliée, par ailleurs, par l'intermédiaire d'une chambre annulaire 40, délimitée sur la surface extérieure de ladite colonne 15, et d'un canal 41 traversant le corps 3 au niveau de ladite chambre 40 et fermé extérieurement par un bouchon 42, à une chambre annulaire 43 délimitée entre les joints d'étanchéité 36, la surface interne du corps 3 et la surface externe du corps cylindrique intermédiaire prolongeant l'arbre central 1 vers l'avant, ladite chambre 43 débouchant elle-même par l'intermédiaire d'un perçage traversant 44 dans une chambre annulaire 45, usinée sur le corps de la vis axiale 22 et délimitée par des joints d'étanchéité 46, ladite chambre 45 étant reliée par un perçage borgne radial à un perçage borgne axial 47 débouchant sur sa face avant de fixation de l'outil. Ainsi, il est possible de réaliser une lubrification centrale dans le cas d'utilisation d'outils à trou d'huile, la lubrification périphérique pouvant être empêchée par utilisation d'une vis 25 plus longue et une lubrification périphérique par un montage tel que représenté sur la figure 1.

Bien entendu, il est également possible de réaliser simultanément une lubrification centrale et une lubrification périphérique.

Par ailleurs, de manière connue en soi, les jeux de roulement 4 assurant le guidage en rotation de l'arbre 1 dans le dispositif de palpage 2 sont avantageusement lubrifiés par graissage au moyen de graisseurs non représentés sur les dessins.

Les figures 7 à 9 des dessins annexés représentent des variantes de réalisation de l'invention.

La figure 7 est une vue en plan et en coupe, à plus grande échelle, analogue à celle de la figure 1, dans laquelle l'arbre central 1 est muni d'un alésage 48 de montage de la queue de l'outil qui est serrée au moyen d'une vis coopérant avec un plat incliné de ladite queue et pénétrant dans un trou taraudé 49 incliné à 4° par rapport à la perpendiculaire à l'axe de l'outil et accessible à travers un trou 52 (figure 10) prévu à cet effet dans la paroi du couvercle de palpage 5' qui présente un dégagement plus important autour de l'outil, ainsi que des canaux 50 de sortie directe de l'air de nettoyage (figure 8). Le dégagement plus important du couvercle de palpage 5' permet une meilleure évacuation des copeaux et la prévision de canaux 50 de sortie directe de l'air permet d'éviter un montage de petits tubes complémentaires.

Enfin, la figure 9 des dessins annexés représente une variante de réalisation du montage du raccord 13 d'alimentation en eau de lubrification, qui est avantageusement pourvu d'un clapet de non-retour 51.

Le dispositif conforme à l'invention fonctionne de la manière suivante :

Le bras manipulateur de la machine est pourvu à un emplacement bien spécifique d'un doigt de centrage destiné à coopérer avec le support d'indexation 7 en vue de l'indexage de l'ensemble porte-outils conforme à l'invention en une position immuable. Cet indexage est nécessaire pour le changement automatique de l'ensemble porte-outils entre la broche et le transfert dans le magasin d'outils. Ceci est notamment possible du fait que la broche est également arrêtée avec un positionnement très strict. Ainsi, à l'arrêt de la broche l'ensemble porte-outils sera toujours présenté face à l'indexage sur le bâti de la broche et maintenu dans la position sur la broche avec les raccords d'alimentation 12 et 13.

Pendant l'usinage, le bâti de la machine, y compris la broche, se déplace axialement en direction de la pièce à usiner, seul l'arbre central porte-outils 1 étant en rotation pendant les opérations d'usinage et se comportant grâce aux roulements 4 comme un joint tournant pour lubrification, le dispositif de palpage 2 avec tous ses accessoires restant fixe en rotation, du fait que les raccords d'alimentation 12 et 13 sont enclenchés dans le support fixe prévu sur le bâti de la broche.

Dans le dispositif 2, seul un mouvement axial des deux colonnes 14 et 15, ainsi que du couvercle palpeur 5 et de la plaque porte-butée 6 avec les deux butées micrométriques 39 est possible.

Au départ de l'usinage, l'ensemble porte-outils monté dans la broche de la machine se présente dans la position indiquée sur la figure 1, le couvercle de palpage 5 étant en position avancée sous l'action des ressorts 17, l'outil central étant fixé dans l'arbre 1 en mandrin à pince ou dans un système de fixation du type Whistle-Notch, avec une valeur de dépassement préréglée pour réaliser la profondeur de fraisure demandée. L'outil de coupe sera alors réglé au moyen de la vis axiale 22, de telle manière qu'au moment du déclenchement la course des colonnes 14 et 15 de soutien du palpeur dans le corps 3 du dispositif de palpage 2 soit égale à la moitié ou aux deux tiers de la course maximale possible. Lorsque la profondeur souhaitée est atteinte après application de la face avant du couvercle palpeur 5, les deux butées micrométriques 39 sont réglées de manière à déclencher les micro-contacts correspondants, qui sont destinés à inverser le mouvement axial de l'ensemble bâti et broche de la machine.

Les machines-outils utilisées pour de tels usinages sont pourvues d'une tête de broche universelle programmée afin de pouvoir suivre toutes les formes des pièces à usiner, de sorte que ladite tête se présente toujours avec son axe perpendiculaire à la pièce. Après le réglage de l'ensemble porte-outils la distance de la pièce à la broche peut varier sans influencer la profondeur du fraisurage qui sera toujours rigoureusement identique grâce aux butées micrométriques 39 et à la commande du retour de la broche par les micro-contacts correspondants. De manière connue, l'arrivée de l'air et de l'eau est programmée par rapport à la phase d'usinage et les jets d'air qui sont pulsés à l'avant du couvercle de palpage 5 sont destinés à nettoyer l'emplacement de l'usinage avant l'application dudit couvercle de palpage sur la pièce à usiner, afin d'éviter toute interposition de copeaux, ou autres, entre la face du couvercle et la pièce, ce qui aurait pour conséquence un non-respect de la profondeur du fraisurage.

Grâce à l'invention, il est possible de réaliser un ensemble porte-outils permettant la réalisation d'opérations d'usinage répétitives particulièrement précises, notamment dans le domaine de la construction aéronautique et spatiale.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1.  Ensemble porte-outils, essentiellement constitué par un arbre central porte-outil (1) muni, d'une part, d'un cône de montage pour la fixation dans une broche de machine-outil et, d'autre part, du côté opposé au cône, d'un corps cylindrique intermédiaire pourvu à sa partie avant d'un moyen de fixation d'un outil, caractérisé en ce qu'il est pourvu, en outre, d'un dispositif (2) de palpage centré sur l'arbre central (1) et guidé en translation sur ce dernier, d'un moyen de lubrification et d'un moyen de nettoyage de l'emplacement de l'usinage au niveau de l'application du dispositif de palpage (2).

2.  Ensemble, suivant la revendication 1, caractérisé en ce que le dispositif de palpage (2) est constitué par un corps cylindrique (3) centré sur l'arbre central porte-outils (1) au moyen de roulements (4), protégés vers l'extérieur du corps (3) par des bagues d'étanchéité (33) et s'appuyant contre des épaulements dudit corps (3) au moyen d'entretoises (35), des joints d'étanchéité (36) réalisant l'étanchéité vers l'intérieur du corps (3), qui est bloqué en translation sur ledit arbre (1) au moyen d'un écrou (21) lui-même bloqué en position par des vis à bout plat (24), par un couvercle de palpage (5) s'étendant sur la partie avant de l'ensemble porte-outils concentriquement à l'outil, par une plaque porte-butée (6) reliée au corps cylindrique (3) sur son côté tourné vers le cône de l'arbre central (1) et par un support d'indexation (7) positionné sur le corps (3) au moyen d'une goupille (8), fixé sur ledit corps (3) au moyen d'une vis (9) et portant un dispositif de codage (10), tel qu'une puce électronique.

3. Ensemble, suivant la revendication 2, caractérisé en ce que, à son extrémité arrière portant la plaqueporte-butée (6), le corps cylindrique (3) présente une partie excentrée (11) portant un raccord d'alimentation en air (12) et un raccord d'alimentation en eau (13) fixés au moyen de vis (37) et reliés, par l'intermédiaire de canaux respectifs (12' et 13'), à des colonnes correspondantes d'arrivée d'air (14) et d'arrivée d'eau (15) montées de manière déplaçable en translation dans le corps cylindrique (3) contre l'action de ressorts (16) guidés sur des tétons (17) s'appuyant sur des goupilles (18) diamétralement opposées logées dans le corps (3) et coopérant, pour le guidage et une limitation du déplacement des colonnes (14 et 15), avec des lumières prévues dans les extrémités de ces colonnes (14 et 15), l'étanchéité du montage des colonnes (14 et 15) dans le corps cylindrique (3) étant assurée par des joints toriques (19) serrés au moyen de bouchons (20) et lesdites colonnes (14 et 15) portant à leur extrémité opposée le couvercle de palpage (5).

4. Ensemble, suivant l'une quelconque des revendications 2 et 3, caractérisé en ce que le couvercle de palpage (5) est fixé, d'une part, sur la colonne d'arrivée d'eau (15) au moyen d'une vis (25) et sur la colonne d'arrivée d'air (14) au moyen de deux vis pointeau (26) et les conduites respectives d'amenée d'eau et d'amenée d'air desdites colonnes (15 et 14) sont reliées à des chambres annulaires correspondantes (27 et 28) délimitées dans ledit couvercle (5), d'une part, par une rondelle-bague en deux segments (29) et, d'autre part, par une bague de fermeture extérieure (30), lesdites chambres (27 et 28) débouchant respectivement à l'avant de la partie interne du couvercle (5) et sur la face avant de ce dernier par l'intermédiaire de canaux en biais (31) et de buses d'arrivée d'air (32).

5. Ensemble, suivant l'une quelconque des revendications 2 à 4, caractérisé en ce que la plaque porte-butée (6) est, d'une part, fixée sur les colonnes d'arrivée d'air (14) et d'arrivée d'eau (15) au moyen de vis à tête fraisée (38) pénétrant dans l'extrémité desdites colonnes comportant les lumières de passage des goupilles (18), à l'arrière de ces lumières et, d'autre part, pourvue d'au moins une, de préférence de deux butées micrométriques (39) destinées à coopérer avec des micro-contacts correspondants prévus sur le bâti de la broche de la machine-outil.

6. Ensemble, suivant l'une quelconque des revendications 2 à 5, caractérisé en ce que la conduite d'amenée d'eau de la colonne d'arrivée d'eau (15) est reliée, par ailleurs, par l'intermédiaire d'une chambre annulaire (40), délimitée sur la surface extérieure de ladite colonne (15), et d'un canal (41) traversant le corps (3) au niveau de ladite chambre (40) et fermé extérieurement par un bouchon (42), à une chambre annulaire (43) délimitée entre les joints d'étanchéité (36), la surface interne du corps (3) et la surface externe du corps cylindrique intermédiaire prolongeant l'arbre central (1) vers l'avant, ladite chambre (43) débouchant elle-même par l'intermédiaire d'un perçage traversant (44) dans une chambre annulaire (45), usinée sur le corps de la vis axiale (22) et délimitée par des joints d'étanchéité (46), ladite chambre (45) étant reliée par un perçage borgne radial à un perçage borgne axial (47) débouchant sur sa face avant de fixation de l'outil.

7. Ensemble, suivant l'une quelconque des revendications 1 et 2, caractérisé en ce que le couvercle de palpage (5') présente un dégagement plus important autour de l'outil, ainsi que des canaux (50) de sortie directe de l'air de nettoyage et est muni dans sa paroi d'un trou (52) permettant l'accès au trou taraudé (49), incliné à 4° par rapport à la perpendiculaire à l'axe de l'outil et destiné à la vis de serrage de ce dernier dans l'alésage (48) de l'arbre central (1).

8. Ensemble, suivant la revendication 3, caractérisé en ce que le raccord (13) d'alimentation en eau de lubrification est avantageusement pourvu d'un clapet de non-retour (51).

EP 0 436 453 A1

Fig.3

Fig.2

Fig.1

Fig.4

Fig.6

Fig.5

6

Fig.7

Fig.8

Fig.9

Fig.10

Office européen
des brevets

RAPPORT DE RECHERCHE
EUROPEENNE

Numéro de la demande

EP 90 44 0127

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 884 819 (ROUBLOFF)<br>* Colonne 5, lignes 68-75; revendication 1 *<br>– – – | 1 | B 23<br>Q 16/00<br>B 23 Q 5/04 |
| Y<br>A | | 2<br>4,5,7 | |
| Y | US-A-4 795 293 (MIZOGUCHI)<br>* Revendication 1 *<br>– – – | 2 | |
| A | FR-A-2 586 957 (AEROSPATIALE)<br>* Revendication 1 *<br>– – – – – | 3-5 | |

DOMAINES TECHNIQUES
RECHERCHES (Int. Cl.5)

B 23 Q

Le présent rapport de recherche a été établi pour toutes les revendications

| Lieu de la recherche | Date d'achèvement de la recherche | Examinateur |
|---|---|---|
| La Haye | 11 avril 91 | DE GUSSEM J.L. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

&: membre de la même famille, document
correspondant